# EUROPEAN PATENT SPECIFICATION

(11) **EP 3 456 549 B1**
(45) Date of publication and mention of the grant of the patent: **28.07.2021**
(21) Application number: 18194030.5
(22) Date of filing: 12.09.2018
(51) Int. Cl.: B60B 1/08, B60B 1/06, B60B 1/02, B60B 1/14

(54) **MOTORCYCLE WHEEL**
MOTORRADRAD
ROUE DE MOTOCYCLE

(30) Priority: 15.09.2017 JP 2017177355
(43) Date of publication of application: 20.03.2019
(73) Proprietor: Kawasaki Jukogyo Kabushiki Kaisha, Hyogo 650-8670 (JP)
(72) Inventor: MATSUMURA, Norikazu, HYOGO, 650-8670 (JP)
(74) Representative: Porta & Consulenti Associati S.p.A.

(56) References cited:
- EP-A2- 2 572 897
- US-A- 3 709 561
- US-A- 4 118 073
- US-A- 4 280 736
- US-A1- 2007 090 685
- US-A1- 2015 069 817

## Description

### BACKGROUND OF THE INVENTION

### (Field of the Invention)

The present invention relates to a motorcycle wheel including: a rim on which a tire is mounted; a hub that is located at the center thereof and supports a wheel axle; and a plurality of spokes that connect the rim and the hub, in which the rim, the hub and the plurality of spokes are integrally formed.

### (Description of Related Art)

US 2007/090685 discloses a wheel for motorcycle according to the preamble of claim 1 and a production method thereof.

Examples of motorcycle wheels include spoke wheels (for example, JP Laid-open Patent Publication No. 2013-035491) and cast wheels (for example, JP Laid-open Patent Publication No. 2005-297688). A spoke wheel is formed by connecting a hub and a rim by wire-like spokes. Each spoke is fixed to the hub by a nipple. Since the spoke wheel is composed of many components such as the hub, the rim, the spokes and the nipples, the spoke wheel can have a complicated shape and can ensure a high design property. Meanwhile, in a cast wheel, a rim, a hub and spokes are integrally formed, for example, by casting. Therefore, the cast wheel easily ensures desired rigidity, and, in addition, the number of components and the number of production processes can be small, and thus the production cost is also reduced.

Regarding the spoke wheel, since the hub, the rim, the spokes and the nipples are formed as separate components, the number of components is increased, and the number of assembling processes is also increased accordingly. As a result, the production cost is increased. In addition, a plurality of components are assembled, and thus it is difficult to ensure desired rigidity.

### SUMMARY OF THE INVENTION

An object of the present invention is to provide a motorcycle wheel that is a cast wheel but can ensure a high design property.

In order to attain the above object, a motorcycle wheel according to the present invention is recited in claim 1 and includes: a rim on which a tire is mounted; a hub that is located at a center thereof and supports a wheel axle; and a plurality of spokes that connect the rim and the hub, the rim, the hub, and the plurality of spokes being integrally formed. The plurality of spokes include a first spoke and a second spoke disposed adjacent to each other in a circumferential direction of the wheel. The first spoke includes at least one first spoke piece, and the second spoke includes at least one second spoke piece. The first spoke piece has a larger dimension in an axial direction of the wheel than the second spoke piece. Here, one first spoke and one second spoke are composed of one or more first spoke pieces and one or more second spoke pieces, respectively.

According to this configuration, since the wheel is a cast wheel in which the rim, the hub and the spokes are integrally formed, the number of components can be small, and desired strength can also be easily ensured. In addition, since the dimensions in the axial direction of the first spoke pieces are made different from those of the second spoke pieces, an image is obtained in which the first spoke pieces and the second spoke pieces are visually different from each other in a side view, and thus a unique three-dimensional appearance can be obtained. Accordingly, the wheel of the present invention is a cast wheel but can ensure a high design property.

In the present invention, regarding a cross-sectional shape along the circumferential direction, each of the first and second spoke pieces is formed in a rectangular shape in which a dimension thereof in the axial direction is longer than a dimension thereof in the circumferential direction. According to this configuration, since the dimensions in the circumferential direction of the first and second spoke pieces are made smaller, an airy classical appearance can be obtained as an image of thin wire spokes of a spoke wheel in a side view. Furthermore, since the dimensions in a vehicle widthwise direction (axial direction) of the first and second spoke pieces are made longer, desired rigidity of the wheel can be ensured.

In the present invention, a radius of arc of a corner portion of the first spoke piece is set so as to be smaller than that of arc of a corner portion of the second spoke piece, and an end surface in the axial direction of the first spoke piece has lightness set so as to be higher than that of an end surface in the axial direction of the second spoke piece, corresponding to roughness set so as to be lower than that of an end surface in the axial direction of the second spoke piece. According to this configuration, in a side view, the first spokes having higher lightness appear to advance to the outer side in the vehicle widthwise direction, and the second spokes having lower lightness appear to retract to the inner side in the vehicle widthwise direction. Accordingly, the spokes appear three-dimensional, and a unique appearance can be obtained.

In the present invention, the first spoke piece may be connected to the rim and the hub, and the second spoke piece may be connected to the rim and the first spoke piece. According to this configuration, since the first spokes are formed so as to be longer than the second spokes, the first spoke can be made more prominent than the second spokes. Accordingly, the spokes appear more three-dimensional, and a unique appearance can be obtained.

In the case where the second spoke piece is connected to the first spoke piece, a connection portion between the first spoke piece and the second spoke piece may be located at a radially inner side with respect to an outer circumferential edge of a brake disc mounted on the wheel. According to this configuration, the connection portions are not seen from the outer side in the vehicle widthwise direction, and thus do not impair the appearance of the wheel.

In the present invention, each of the first and second spoke pieces may have a dimension in the axial direction gradually decreasing toward the rim. According to this configuration, since the first and second spoke pieces are formed in a tapered shape, an image of wire spokes of a spoke wheel can be obtained, and the appearance is rendered to be better.

In the present invention, the first spoke may have the two first spoke pieces adjacent to each other in the circumferential direction, and the second spoke may have the two second spoke pieces adjacent to each other in the circumferential direction. According to this configuration, since one spoke is composed of the two spoke pieces, a stable appearance image can be obtained. In this case, the five first spokes and the five second spokes may be provided at equal intervals in the circumferential direction. According to this configuration, desired rigidity is easily ensured when an increased number of the respective spoke pieces are arranged in a balanced manner in the circumferential direction while an image of wire spokes is obtained by making the respective spoke pieces thin.

In the case where the first spoke and the second spoke have the two first spoke pieces and the two second spoke pieces, respectively, at least the two second spoke pieces of the second spoke among the first and second spokes may be slanted such that an interval therebetween in the circumferential direction decreases toward the rim. According to this configuration, the second spoke piece can be disposed uniformly in a balanced manner in the circumferential direction, and therefore, the strength of the wheel improves.

In the case where the first spoke and the second spoke have the two first spoke pieces and the two second spoke pieces, respectively, a circumferential interval between a connection portion between the first spoke piece and the rim and a connection portion between the second spoke piece adjacent thereto and the rim may be larger than a circumferential interval between connection portions between the rim and the two first spoke pieces forming the first spoke and a circumferential interval between connection portions between the rim and the two second spoke pieces forming the second spoke. According to this configuration, since the circumferential intervals between the respective connection portions are made different, a unique appearance can be obtained. In addition, a holding piece for mounting a balance weight can be disposed on a portion having the largest circumferential interval. Accordingly, it is easy to perform work for attaching or detaching a balance weight.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a side view showing a motorcycle wheel according to a first embodiment of the present invention;
Fig. 2 is a perspective view showing the wheel; and
Fig. 3 is a cross-sectional view taken along the circumferential direction of the wheel.

### DESCRIPTION OF EMBODIMENTS

Hereinafter, a preferred embodiment of the present invention will be described with reference to the drawings. In the following description, the term "lateral direction" refers to a vehicle widthwise direction in a state where a wheel is mounted on a motorcycle.

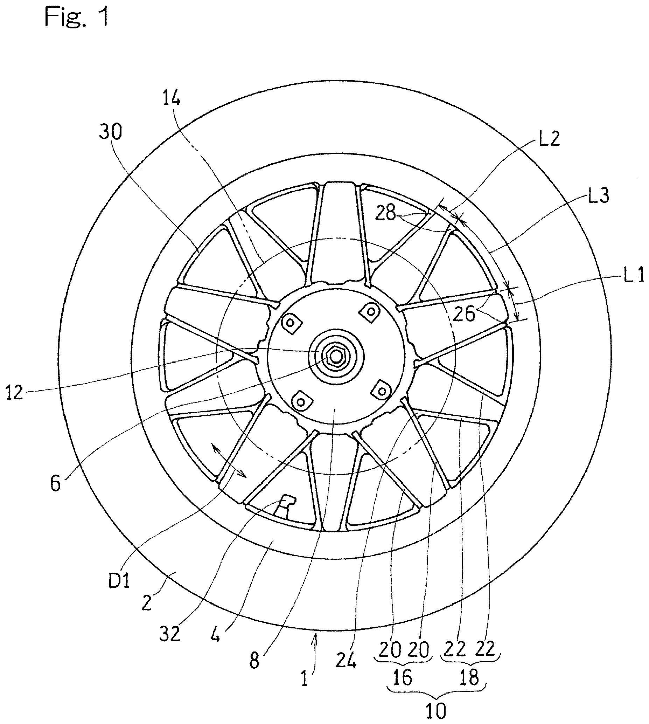

Fig. 1 is a side view showing a motorcycle wheel 1 according to a first embodiment of the present invention. The wheel 1 includes: a rim 4 on which a tire 2 is mounted; a hub 8 that is located at the center of the wheel 1 and supports a wheel axle 6; and a plurality of spokes 10 that connect the rim 4 and the hub 8. The wheel 1 of the present invention is a cast wheel in which the rim 4, the hub 8 and the spokes 10 are integrally formed by casting. The wheel 1 of the present embodiment is a casting made of an aluminum alloy. However, the material of and the production method for the wheel 1 are not limited thereto, and the wheel 1 may be made of a magnesium alloy or iron and may be formed by cutting a casting or an ingot.

A wheel bearing 12 is fitted into the hub 8, and the wheel axle 6 is rotatably supported by the wheel bearing 12. The wheel axle 6 is mounted to a vehicle body by a publicly known method. A brake disc 14 is detachably mounted on each side end surface of the hub 8.

The spokes 10 include first spokes 16 and second spokes 18. The first spokes 16 and the second spokes 18 are disposed adjacent to each other in the circumferential direction D1 of the wheel 1. In the present embodiment, each first spoke 16 is formed by two first spoke pieces 20 adjacent to each other in the circumferential direction D1. The first spoke 16 may include at least one first spoke pieces 20. Similarly, each second spoke 18 is formed by two second spoke pieces 22 adjacent to each other in the circumferential direction D1. The second spoke 18 may include at least one second spoke pieces 22. In the present embodiment, five first spokes 16 and five second spokes 18 are provided at equal intervals in the circumferential direction D1. The respective first spoke pieces 20 have the same shape, and the respective second spoke pieces 22 also have the same shape.

Here, one first spoke 16 may be composed of one or more first spoke pieces 20, and one second spoke 18 may be composed of one or more second spoke pieces 22. Therefore, each of the number of first spoke pieces 20 forming the first spoke 16 and the number of second spoke pieces 22 forming the second spoke 18 is not limited to two, and may be one or may be three or more. In addition, each of the number of first spokes 16 and the number of second spokes 18 may be two or more and is not limited to five.

In the present embodiment, each first spoke piece 20 is connected to the rim 4 and the hub 8. Meanwhile, each second spoke piece 22 is connected to the rim 4 and the first spoke piece 20. However, each second spoke piece 22 may be formed so as to connect the rim 4 and the hub 8. The first and second spoke pieces 20 and 22 extend straight in a side view. In the present embodiment, connection portions 24 between the first spoke pieces 20 and the second spoke pieces 22 are located at the radially inner side with respect to the outer circumferential edge of the brake disc 14.

Regarding each first spoke 16, the two first spoke pieces 20 forming the first spoke 16 extend so as to be slanted such that the interval therebetween in the circumferential direction decreases toward the rim 4. Similarly, regarding each second spoke 18, the two second spoke pieces 22 forming the second spoke 18 also extend so as to be slanted such that the interval therebetween in the circumferential direction decreases toward the rim 4. In the present embodiment, both the first spoke pieces 20 and the second spoke pieces 22 do not extend toward the rim 4 in the radial direction but extend toward the rim 4 so as to be slanted relative to the radial direction. However, it is possible that only the second spoke pieces 22 are slanted.

Each first spoke piece 20 is connected to the rim 4 by a first connection portion 26. Each second spoke piece 22 is connected to the rim 4 by a second connection portion 28. In the present embodiment, a first circumferential interval L1 between the two first connection portions 26 is larger than a second circumferential interval L2 between the two second connection portions 28 of the two second spoke pieces 22. In addition, a third circumferential interval L3 between the first connection portion 26 and the second connection portion 28 adjacent thereto is larger than the first circumferential interval L1 and the second circumferential interval L2 (L3>L1>L2).

Holding pieces 30 for balance weights are mounted on the inner circumferential surface of the rim 4. Balance weights mounted on the holding pieces 30 are provided to present unstable rotation of the wheel 1 and the tire 2. Each holding piece 30 is mounted on a wide portion in the circumferential direction of the inner circumferential surface of the rim 4, that is, on the portion between the first connection portion 26 and the second connection portion 28. In addition, an air valve 32 for pumping air into the tire 2 is provided on the inner circumferential surface of the rim 4. The air valve 32 is also mounted on the portion of the inner circumferential surface of the rim 4 between the first connection portion 26 and the second connection portion 28. The air valve 32 of the present embodiment has an L shape.

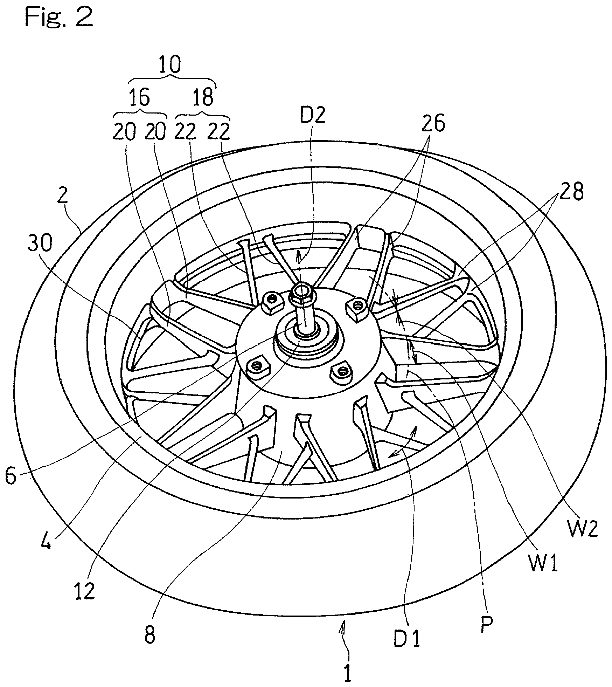

As shown in Fig. 2, each first spoke piece 20 is formed such that a dimension thereof in the axial direction D2 of the wheel 1 at a radial position P is larger than that of each second spoke piece 22. That is, each second spoke piece 22 is entirely disposed at the inner side of the first spoke piece 20 in the vehicle widthwise direction. In the present embodiment, the dimension W1 in the axial direction D2 of each first spoke piece 20 gradually decreases toward the rim 4. Similarly, the dimension W2 in the axial direction D2 of each second spoke piece 22 gradually decreases toward the rim 4.

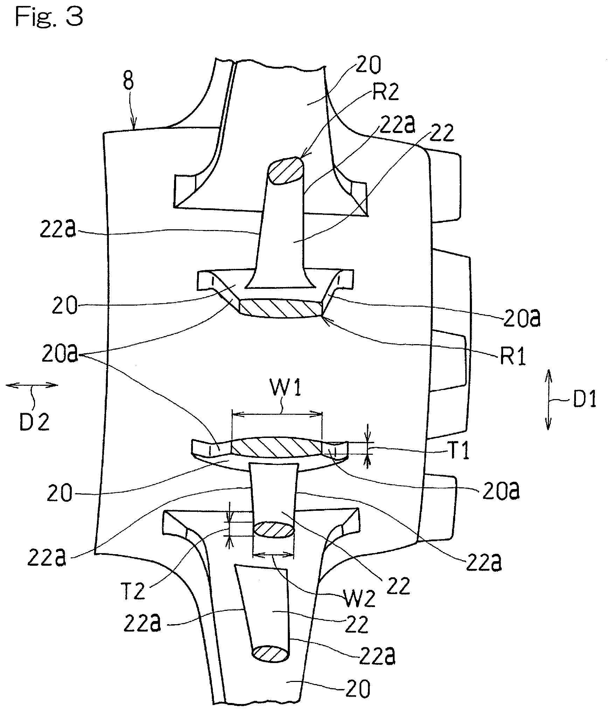

Fig. 3 shows cross sections of the spokes 10 taken along the circumferential direction D1. As shown in Fig. 3, in the present embodiment, regarding the cross-sectional shape along the circumferential direction, each first spoke piece 20 is formed in a rectangular shape in which the dimension W1 thereof in the axial direction D2 is longer than the dimension T1 thereof in the circumferential direction D1. Similarly, each second spoke piece 22 is formed in a rectangular shape in which the dimension W2 thereof in the axial direction D2 is longer than the dimension T2 thereof in the circumferential direction D1.

The dimension W1 in the axial direction D2 of each first spoke piece 20 is set so as to be larger than the dimension W2 in the axial direction D2 of each second spoke piece 22. Meanwhile, the dimension T1 in the circumferential direction D1 of each first spoke piece 20 is set so as to be substantially equal to the dimension T2 in the circumferential direction D1 of each second spoke piece 22. That is, each first spoke piece 20 has a flattened cross-sectional shape as compared to each second spoke piece 22.

In the present embodiment, the rectangular cross-sectional shapes of the first and second spoke pieces 20 and 22 are formed such that corner portions thereof are rounded into arc shapes. The radius (angle R1) of the arc of each corner portion of each first spoke piece 20 is set so as to be smaller than the radius (angle R2) of the arc of each corner portion of each second spoke piece 22 (R1<R2).

As described above, the wheel 1 of the present invention is a cast wheel formed by casting. In the present embodiment, both end surfaces 20a in the axial direction D2 of each first spoke piece 20 are subjected to machining or cutting. That is, the end surfaces 20a of each first spoke piece 20 are formed as machined surfaces or cutting surfaces. Meanwhile, end surfaces 22a in the axial direction D2 of each second spoke piece 22 are not subjected to machining or cutting. As a result of the cutting as described above, the lightness of the end surfaces 20a of each first spoke piece 20 is set so as to be higher than that of the end surfaces 22a in the axial direction D2 of each second spoke piece 22, and also, the radius (angle R1) of the arc of each corner portion thereof is so small that the corner portion has a substantially pointed shape (R1<R2). Polishing or grinding may be used instead of the cutting.

Here, the "lightness" is influenced by surface roughness. Specifically, the higher the value of surface roughness, the rougher the surface is and the lower the lightness is. Meanwhile, the lower the value of surface roughness, the flatter the surface is and the higher the lightness is. In the present embodiment, since the end surfaces 20a of each first spoke piece 20 are formed as cutting surfaces, the lightness of the end surfaces 20a of each first spoke piece 20 is higher than that of the end surfaces 22a of each second spoke piece 22. The lightness of the end surfaces 20a of each first spoke piece 20 can be increased by painting the end surfaces 20a of each first spoke piece 20 or attaching a tape or the like to the end surfaces 20a of each first spoke piece 20, other than cutting the end surfaces 20a of each first spoke piece 20.

In the present embodiment, as a result of cutting the first spoke pieces 20, the radius (angle R1) of the arc of each corner portion of each first spoke piece 20 is set so as to be smaller than that of each second spoke piece 22. However, other than machining or cutting the first spoke pieces 20, for example, by using a mold, the radius (angle R1) of the arc of each corner portion of each first spoke piece 20 can be set so as to be smaller than that of each second spoke piece 22.

When the lightness of the end surfaces 20a of the first spoke pieces 20 is made higher and the radius of the arc of each corner portion of each first spoke piece 20 is made smaller (R1<R2) as described above, the first spokes 16 appear at the outer side in the vehicle widthwise direction, that is, at the near side of an observer, with respect to the second spokes 18 in a side view. As a result, the first spokes 16 are more prominent than the second spokes 18 in a side view. Accordingly, the spokes 10 of the wheel 1 appear three-dimensional.

According to the above configuration, since the wheel 1 is a cast wheel in which the rim 4, the hub 8 and the spokes 10 are integrally formed, the number of components can be small, and desired strength can also be easily ensured. In addition, since the dimensions in the axial direction (vehicle widthwise direction) of the first spoke pieces 20 are different from those of the second spoke pieces 22 as shown in Fig. 2, an image can be obtained in which the first spoke pieces 20 and the second spoke pieces 22 are visually different from each other in a side view. As a result, a unique three-dimensional appearance can be obtained. Accordingly, the wheel 1 of the present embodiment is a cast wheel but can ensure a high design property.

Regarding the cross-sectional shape along the circumferential direction in Fig. 3, each of the first and second spoke pieces 20 and 22 is formed in a rectangular shape in which the dimension W1 or W2 thereof in the axial direction is longer than the dimension T1 or T2 thereof in the circumferential direction. According to this configuration, since the dimensions T1 and T2 in the circumferential direction of the first and second spoke pieces 20 and 22 are made smaller, an airy classical appearance can be obtained as an image of thin wire spokes of a spoke wheel in a side view. Furthermore, since the dimensions W1 and W2 in the vehicle widthwise direction (axial direction) of the first and second spoke pieces 20 and 22 are made longer, desired rigidity of the wheel can be ensured.

The radius (angle R1) of the arc of each corner portion of the first spoke pieces 20 is set so as to be smaller than the radius (angle R2) of the arc of each corner portion of the second spoke pieces 22, and the lightness of the end surfaces 20a in the axial direction of the first spoke pieces 20 is set so as to be higher than that of the end surfaces 22a in the axial direction of the second spoke pieces 22. Thus, in the side view of Fig. 1, the first spokes 16 appear to advance to the outer side in the vehicle widthwise direction, and the second spokes 18 appear to retract to the inner side in the vehicle widthwise direction. As a result, the spokes 10 appear three-dimensional, and a unique appearance can be obtained.

The first spoke pieces 20 are connected to the rim 4 and the hub 8, and the second spoke pieces 22 are connected to the rim 4 and the first spoke pieces 20. Accordingly, since the first spokes 16 are formed so as to be longer than the second spokes 18, the first spoke 16 can be made more prominent than the second spokes 18. As a result, the spokes 10 appear more three-dimensional, and a unique appearance can be obtained.

The connection portions 24 between the first spoke pieces 20 and the second spoke pieces 22 are located at the radially inner side with respect to the outer circumferential edge of the brake disc 14. Accordingly, the connection portions 24 are not seen from the outer side in the vehicle widthwise direction, and thus do not impair the appearance of the wheel 1.

As shown in Fig. 2, the dimensions in the axial direction D2 of the first and second spoke pieces 20 and 22 gradually decrease toward the rim 4. Since the first and second spoke pieces 20 and 22 are formed in a tapered shape as described above, the appearance can be made close to an image of wire spokes of a spoke wheel, and is rendered to be better.

Each first spoke 16 has the two first spoke pieces 20 adjacent to each other in the circumferential direction, and each second spoke 18 has the two second spoke pieces 22 adjacent to each other in the circumferential direction. Since one first spoke 16 (one second spoke 18) is composed of the two first spoke pieces 20 (two second spoke pieces 22) as described above, a stable appearance image can be obtained.

As shown in Fig. 1, the five first spokes 16 and the five second spokes 18 are provided at equal intervals in the circumferential direction D1. That is, ten first spoke pieces 20 and ten second spoke pieces 22 are provided, and the spokes 10 include 20 spoke pieces 20 and 22 in total. Accordingly, desired rigidity can be ensured when increased numbers of the respective spoke pieces 20 and 22 are arranged in a balanced manner in the circumferential direction, while an image of wire spokes is obtained by making the respective spoke pieces 20 and 22 thin. In addition, since the number of the spoke pieces 20 and 22 is increased, molten metal disperses and flows smoothly during casting. As a result, castability can be improved.

The two first spoke pieces 20 forming the first spoke 16 extend so as to be slanted such that the interval therebetween in the circumferential direction decreases toward the rim 4, and the two second spoke pieces 22 forming the second spoke 18 extend so as to be slanted such that the interval therebetween in the circumferential direction decreases toward the rim 4. Accordingly, the spoke pieces 20 and 22 can be disposed uniformly in a balanced manner in the circumferential direction, and therefore, the strength of the wheel 1 improves.

As described above, the first circumferential interval L1 between the first connection portions 26, 26 between the two first spoke pieces 20 and the rim 4 is set so as to be larger than the second circumferential interval L2 between the second connection portions 28, 28 between the two first spoke pieces 22 and the rim 4, and also, the third circumferential interval L3 between the first connection portion 26 and the second connection portion 28 is set so as to be larger than the first circumferential interval L1 and the second circumferential interval L2 (L3>L1>L2). Since the circumferential intervals L1, L2 and L3 are made different form each other as described above, a unique appearance can be obtained.

The air valve 32 and the holding pieces 30 for balance weights can be disposed on the portions having the largest circumferential interval in the inner circumferential surface of the rim 4. Since the air valve 32 has an L shape and thus the air inlet thereof is directed in the circumferential direction D1, workability at the time of air pumping is good. In addition, since the holding pieces 30 are disposed on the portions having the largest circumferential interval, it is rendered to be easy to perform work for attaching or detaching a balance weight.

### Reference Numerals

1, 1A ···· wheel
2 ···· tire
4 ···· rim
6 ···· wheel axle
8 ···· hub
10 ···· spoke
14 ···· brake disc
16 ···· first spoke
18 ···· second spoke
20 ···· first spoke piece
20a ···· end surface of first spoke piece
22 ···· second spoke piece
22a ···· end surface of second spoke piece
24 ···· connection portion between first spoke piece and second spoke piece
26 ···· first connection portion (connection portion between first spoke piece and rim)
28 ···· second connection portion (connection portion between second spoke piece and rim)
D1 ···· circumferential direction of wheel
D2 ···· axial direction of wheel

## Claims

1. A motorcycle wheel (1) comprising:
a rim (4) on which a tire (2) is mounted;
a hub (8) that is located at a center thereof and supports a wheel axle (6); and
a plurality of spokes (10) that connect the rim (4) and the hub (8),
the rim (4), the hub (8), and the plurality of spokes (10) being integrally formed, wherein
the plurality of spokes (10) include a first spoke (16) and a second spoke (18) disposed adjacent to each other in a circumferential direction (D1) of the wheel (1), and
the first spoke (16) includes at least one first spoke piece (20),
the second spoke (18) includes at least one second spoke piece (22),
wherein the first spoke piece (20) has a larger dimension in an axial direction (D2) of the wheel (1) than the second spoke piece (22), and,
regarding a cross-sectional shape along the circumferential direction (D1), each of the first and second spoke pieces (20, 22) is formed in a rectangular shape in which a dimension (W1, W2) thereof in the axial direction (D2) is longer than a dimension (T1, T2) thereof in the circumferential direction (D1), **characterised in that**
a radius (R1) of arc of a corner portion of the first spoke piece (20) is set so as to be smaller than that (R2) of arcs of a corner portion of the second spoke piece (22), and
an end surface (20a) in the axial direction (D2) of the first spoke piece (20) has roughness set so as to be lower than that of an end surface (22a) in the axial direction (D2) of the second spoke piece (22).

2. The motorcycle wheel (1) as claimed in claim 1, wherein
the first spoke piece (20) is connected to the rim (4) and the hub (8), and
the second spoke piece (22) is connected to the rim (4) and the first spoke piece (20).

3. The motorcycle wheel (1) as claimed in claim 2, wherein a connection portion (24) between the first spoke piece (20) and the second spoke piece (22) is located at a radially inner side with respect to an outer circumferential edge of a brake disc (14) mounted on the wheel (1).

4. The motorcycle wheel (1) as claimed in any one of claims 1 to 3, wherein each of the first and second spoke pieces (20, 22) has a dimension in the axial direction (D2) gradually decreasing toward the rim (4).

5. The motorcycle wheel (1) as claimed in any one of claims 1 to 4, wherein
the first spoke (16) has the two first spoke pieces (20) adjacent to each other in the circumferential direction (D1), and
the second spoke (18) has the two second spoke pieces (22) adjacent to each other in the circumferential direction (D1).

6. The motorcycle wheel (1) as claimed in claim 5, wherein at least the two second spoke pieces (22) of the second spoke (18) among the first and second spokes (16, 18) are slanted such that an interval therebetween in the circumferential direction (D1) decreases toward the rim (4).

7. The motorcycle wheel (1) as claimed in claim 5 or 6, wherein a circumferential interval (L3) between a connection portion (26) between the first spoke piece (20) and the rim (4) and a connection portion (28) between the second spoke piece (22) adjacent thereto and the rim (4) is larger than a circumferential interval (L1) between connection portions (26) between the rim (4) and the two first spoke pieces (20) forming the first spoke (16) and a circumferential interval (L2) between connection portions (28) between the rim (4) and the two second spoke pieces (22) forming the second spoke (18).

8. The motorcycle wheel (1) as claimed in any one of claims 5 to 7, wherein the five first spokes (16) and the five second spokes (18) are provided at equal intervals in the circumferential direction (D1).

## Patentansprüche

1. Motorradrad (1), Folgendes umfassend:
eine Felge (4), auf der ein Reifen (2) montiert ist;
eine Nabe (8), die in einer Mitte davon lokalisiert ist und eine Radachse (6) trägt; und
eine Vielzahl von Speichen (10), die die Felge (4) und die Nabe (8) verbinden,
wobei die Felge (4), die Nabe (8) und die Vielzahl von Speichen (10) einstückig ausgebildet sind, wobei
die Vielzahl von Speichen (10) eine erste Speiche (16) und eine zweite Speiche (18) einschließt, die in einer Umfangsrichtung (D1) des Rades (1) benachbart angeordnet sind, und
die erste Speiche (16) mindestens ein erstes Speichenstück (20) einschließt, die zweite Speiche (18) mindestens ein zweites Speichenstück (22) einschließt,
wobei das erste Speichenstück (20) eine größere Abmessung in einer axialen Richtung (D2) des Rades (1) aufweist als das zweite Speichenstück (22), und bezüglich einer Querschnittsform entlang der Umfangsrichtung (D1) jedes der ersten und zweiten Speichenstücke (20, 22) in einer rechteckigen Form ausgebildet ist, bei der eine Abmessung (W1, W2) davon in der Axialrichtung (D2) länger ist als eine Abmessung (T1, T2) davon in der Umfangsrichtung (D1), **dadurch gekennzeichnet, dass**
ein Bogenradius (R1) eines Eckenabschnitts des ersten Speichenstücks (20) so eingestellt ist, dass er kleiner ist als der Bogenradius (R2) eines Eckenabschnitts des zweiten Speichenstücks (22), und
eine Endfläche (20a) in der Axialrichtung (D2) des ersten Speichenstücks (20) eine Rauigkeit aufweist, die so eingestellt ist, dass sie geringer ist als die einer Endfläche (22a) in der Axialrichtung (D2) des zweiten Speichenstücks (22).

2. Motorradrad (1) gemäß Anspruch 1, wobei
das erste Speichenstück (20) mit der Felge (4) und der Nabe (8) verbunden ist und
das zweite Speichenstück (22) mit der Felge (4) und dem ersten Speichenstück (20) verbunden ist.

3. Motorradrad (1) gemäß Anspruch 2, wobei ein Verbindungsabschnitt (24) zwischen dem ersten Speichenstück (20) und dem zweiten Speichenstück (22) an einer radial inneren Seite in Bezug auf einen äußeren Umfangsrand einer an dem Rad (1) montierten Bremsscheibe (14) lokalisiert ist.

4. Motorradrad (1) gemäß einem der Ansprüche 1 bis 3, wobei jedes der ersten und zweiten Speichenstücke (20, 22) eine Abmessung in Axialrichtung (D2) aufweist, die zur Felge (4) hin stufenweise abnimmt.

5. Motorradrad (1) gemäß einem der Ansprüche 1 bis 4, wobei die erste Speiche (16) die beiden ersten Speichenstücke (20) in Umfangsrichtung (D1) zueinander benachbart aufweist, und
die zweite Speiche (18) die beiden zweiten Speichenstücke (22) in Umfangsrichtung (D1) zueinander benachbart aufweist.

6. Motorradrad (1) gemäß Anspruch 5, wobei mindestens die beiden zweiten Speichenstücke (22) der zweiten Speiche (18) unter den ersten und zweiten Speichen (16, 18) derart geneigt sind, dass ein Abstand dazwischen in Umfangsrichtung (D1) zur Felge (4) hin abnimmt.

7. Motorradrad (1) gemäß Anspruch 5 oder 6, wobei ein Umfangsabstand (L3) zwischen einem Verbindungsabschnitt (26) zwischen dem ersten Speichenstück (20) und der Felge (4) und einem Verbindungsabschnitt (28) zwischen dem dazu benachbarten zweiten Speichenstück (22) und der Felge (4) größer ist als ein Umfangsabstand (L1) zwischen Verbindungsabschnitten (26) zwischen der Felge (4) und den beiden ersten Speichenstücken (20), die die erste Speiche (16) bilden, und einem Umfangsabstand (L2) zwischen Verbindungsabschnitten (28) zwischen der Felge (4) und den beiden zweiten Speichenstücken (22), die die zweite Speiche (18) bilden.

8. Motorradrad (1) gemäß einem der Ansprüche 5 bis 7, wobei die fünf ersten Speichen (16) und die fünf zweiten Speichen (18) in gleichen Abständen in Umfangsrichtung (D1) vorgesehen sind.

## Revendications

1. Roue de motocycle (1) comprenant :
une jante (4) sur laquelle un pneu (2) est monté ;
un moyeu (8) qui est situé au niveau d'un centre de celle-ci et supporte un essieu de roue (6) ; et
une pluralité de rayons (10) qui relient la jante (4) et le moyeu (8),
la jante (4), le moyeu (8) et la pluralité de rayons (10) étant formés d'un seul tenant, où
la pluralité de rayons (10) comprend un premier rayon (16) et un second rayon (18) disposés adjacents l'un à l'autre dans une direction circonférentielle (D1) de la roue (1), et
le premier rayon (16) comprend au moins un premier élément de rayon (20),
le second rayon (18) comprend au moins un second élément de rayon (22), où le premier élément de rayon (20) a une dimension supérieure dans une direction axiale (D2) de la roue (1) au second élément de rayon (22), et, concernant une forme de section transversale le long d'une direction circonférentielle (D1), chacun du premier et du second élément de rayon (20, 22) est formé en une forme rectangulaire dans laquelle une dimension (W1, W2) de celle-ci dans la direction axiale (D2) est plus longue qu'une dimension (T1, T2) de celle-ci dans la direction circonférentielle (D1),
**caractérisé en ce que**
un rayon (R1) d'un arc d'une partie d'angle du premier élément de rayon (20) est défini de manière à être plus petit que celui (R2) des arcs d'une partie d'angle du second élément de rayon (22), et
une surface d'extrémité (20a) dans la direction axiale (D2) du premier élément de rayon (20) a une rugosité définie de manière à être inférieure à celle d'une surface d'extrémité (22a) dans la direction axiale (D2) du second élément de rayon (22).

2. Roue de motocycle (1) selon la revendication 1, où
le premier élément de rayon (20) est relié à la jante (4) et au moyeu (8), et
le second élément de rayon (22) est relié à la jante (4) et au premier élément de rayon (20).

3. Roue de motocycle (1) selon la revendication 2, où une partie de connexion (24) entre le premier élément de rayon (20) et le second élément de rayon (22) est située au niveau d'un côté radialement intérieur par rapport à un bord circonférentiel extérieur d'un disque de frein (14) monté sur la roue (1).

4. Roue de motocycle (1) selon l'une quelconque des revendications 1 à 3, où chacun du premier et du second élément (20, 22) a une dimension dans la direction axiale (D2) diminuant graduellement jusqu'à la jante (4).

5. Roue de motocycle (1) selon l'une quelconque des revendications 1 à 4, où
le premier rayon (16) a deux premiers éléments de rayon (20) adjacents l'un à l'autre dans la direction circonférentielle (D1), et
le second rayon (18) a deux seconds éléments de rayon (22) adjacents l'un à l'autre dans la direction circonférentielle (D1).

6. Roue de motocycle (1) selon la revendication 5, où au moins les deux seconds éléments de rayon (22) du second rayon (18) parmi le premier et le second rayon (16, 18) sont inclinés de sorte qu'un intervalle entre eux dans la direction circonférentielle (D1) diminue vers la jante (4).

7. Roue de motocycle (1) selon la revendication 5 ou 6, où un intervalle circonférentiel (L3) entre une partie de liaison (26) entre le premier élément de rayon (20) et la jante (4) et une partie de liaison (28) entre le second élément de rayon (22) adjacent à celui-ci et la jante (4) est plus large d'un intervalle circonférentiel (L1) entre des parties de liaison (26) entre la jante (4) et les deux premiers éléments de rayon (20) formant le premier rayon (16) et un intervalle circonférentiel (L2) entre des parties de liaison (28) entre la jante (4) et les deux seconds éléments de rayon (22) formant le second rayon (18).

8. Roue de motocycle (1) selon l'une quelconque des revendications 5 à 7, où les cinq premiers rayons (16) et les cinq seconds rayons (18) sont fournis à intervalles égaux dans la direction circonférentielle (D1).
